Europäisches Patentamt

European Patent Office

Office européen des brevets

(19)

(11) Veröffentlichungsnummer : **0 357 903 B1**

# (12) EUROPÄISCHE PATENTSCHRIFT

(45) Veröffentlichungstag der Patentschrift:
**11.09.91 Patentblatt 91/37**

(51) Int. Cl.$^5$ : **G01P 13/00**

(21) Anmeldenummer : **89112167.5**

(22) Anmeldetag : **04.07.89**

(54) **Wärmeübergangsmessgerät, insbesondere Strömungswächter.**

(30) Priorität : **23.07.88 DE 3825059**

(43) Veröffentlichungstag der Anmeldung :
**14.03.90 Patentblatt 90/11**

(45) Bekanntmachung des Hinweises auf die
Patenterteilung :
**11.09.91 Patentblatt 91/37**

(84) Benannte Vertragsstaaten :
**CH DE FR GB LI SE**

(56) Entgegenhaltungen :
**EP-A- 0 288 806**
**FR-A- 2 276 592**
**US-A- 3 898 638**
**US-A- 4 311 047**

(73) Patentinhaber : **Buck, Robert**
**Vogelherdbogen 67**
**W-7992 Tettnang (DE)**
Patentinhaber : **Marhofer, Gerd**
**Beckmannsbusch 67**
**W-4300 Essen-Bredeney (DE)**

(72) Erfinder : **Buck, Robert**
**Vogelherdbogen 67**
**W-7992 Tettnang (DE)**
Erfinder : **Marhofer, Gerd**
**Beckmannsbusch 67**
**W-4300 Essen-Bredeney (DE)**

(74) Vertreter : **Gesthuysen, Hans Dieter, Dipl.-Ing.**
**et al**
**Patentanwälte Gesthuysen + von Rohr**
**Huyssenallee 15 Postfach 10 13 33**
**W-4300 Essen 1 (DE)**

## Beschreibung

Die Erfindung geht aus von einem Wärmeübergangsmeßgerät, insbesondere von einem Strömungswächter zur elektrischen Erfassung von Wärmeverlusten in einem strömenden Medium, mit einem vorzugsweise metallischen, kreiszylindrischen, mit einem Außengewinde versehenen Meßgerätgehäuse, mit einem ersten Temperaturmeßelement, mit mindestens einem Heizelement und mit einem zweiten Temperaturmeßelement.

Die Erfindung setzt Wärmeübergangsmeßgeräte in verschiedenen Ausführungsformen als bekannt voraus (vgl. z. B. die DE-OSen 2447617, 2629051, 3213902 und 3222046). Bei diesen Wärmeübergangsmeßgeräten, im folgenden auch Strömungswächter genannt, arbeitet man mit einer Differenztemperaturmessung. Das erste Temperaturmeßelement mißt eine durch das Heizelement und durch das strömende Medium bestimmte Temperatur, im folgenden Meßtemperatur genannt, während das zweite Temperaturmeßelement eine von dem Heizelement möglichst nicht oder in anderer Weise und durch das strömende Medium bestimmte Temperatur, im folgenden Referenztemperatur genannt, mißt. Zu Strömungswächtern der hier in Rede stehenden Art gehören also funktionsnotwendig das erste Temperaturmeßelement, das Heißelement und das zweite Temperaturmeßelement — sowie eine hier nicht weiter interessierende Auswerteschaltung.

Handelt es sich bei dem Medium, dessen Strömung überwacht werden soll, um ein Gas, so können die für die Funktion notwendigen Bauelemente — erstes Temperaturmeßelement, Heizelement und zweites Temperaturmeßelement — mehr oder weniger ungeschützt in den Gasstrom eingebracht werden. Soll jedoch die Strömung eines flüssigen Mediums überwacht werden, so können die für die Funktion notwendigen Bauelemente — erstes Temperaturmeßelement, Heizelement und zweites Temperaturmeßelement — nicht einfach in den Flüssigkeitsstrom eingebracht werden, vielmehr ist es dann erforderlich, diese Bauelemente geschützt in einem Meßgerätgehäuse anzuordnen.

Bei einem in der Praxis bereits realisierten Strömungswächter der zuvor beschriebenen Art ist das Meßgerätgehäuse abgesetzt ausgeführt ; im dünneren Teil des Meßgerätgehäuses befindet sich das erste Temperaturmeßelement und das Heizelement, während sich das zweite Temperaturmeßelement im dickeren Teil des Meßgerätgehäuses, an seinem dem dünneren Teil zugewandten Ende, befindet. Das erste Temperaturmeßelement und das Heizelement sind in einer Aluminiumscheibe angeordnet ; die Aluminiumscheibe stellt also die thermische Verbindung dar zwischen der Stirnseite des Meßgerätgehäuses und einerseits dem ersten Temperaturmeßelement und andererseits dem Heizelement. Das erste Temperaturmeßelement, das Heizelement und die Aluminiumscheibe sind mit einem thermisch gut leitenden Epoxydharz vergossen. Das zweite Temperaturmeßelement befindet sich in einem Abstand von ca. 1 cm von der Stirnseite des Meßgerätgehäuses entfernt, ebenfalls mit einem thermisch gut leitenden Epoxydharz vergossen. Da die Wärme des Heizelements das zweite Temperaturmeßelement nicht erreichen soll, befindet sich zwischen dem Bereich, in dem das erste Temperaturmeßelement und das Heizelement angeordnet sind, und dem Bereich, in dem das zweite Temperaturmeßelement angeordnet ist, thermisch gut isolierendes Material.

Der zuvor beschriebene Strömungswächter ist einerseits thermisch relativ träge, kann andererseits nur relativ aufwendig hergestellt werden, so daß die Aufgabe, einen Strömungswächter der in Rede stehenden Art anzugeben, der einerseits thermisch relativ schnell reagieren kann und der andererseits weniger aufwendig hergestellt werden kann, bereits gelöst worden ist, und zwar dadurch, daß gemäß EP-A-288806 (veröffentlicht 2.11.88) das erste Temperaturmeßelement, das Heizelement und das zweite Temperaturmeßelement auf einer Seite einer elektrisch gut isolierenden, thermisch gut leitenden Trägerfolie aufgebracht sind und die Trägerfolie mit ihrer den Temperaturmeßelementen und dem Heizelement abgewandten Seite zumindest in den Bereichen, in denen die Temperaturmeßelemente und das Heizelement aufgebracht sind, mit dem Meßgerätgehäuse in wärmeleitenden Kontakt gebracht ist. Vorzugsweise besteht dabei die Trägerfolie aus Polymid und hat die Trägerfolie eine Dicke von ca. 50-150 µm, insbesondere von ca. 75 µm. Eine solche Trägerfolie hat einen extrem geringen thermischen Widerstand und ist elektrisch gut isolierend ; die Durchschlagspannung einer solchen Trägerfolie beträgt viele tausend Volt.

Dadurch, daß bei dem zuvor beschriebenen Strömungswächter die funktionsnotwendigen Bauelemente — erstes Temperaturmeßelement, Heizelement und zweites Temperaturmeßelement — thermisch praktisch direkt auf die entsprechenden Innenflächen des Meßgerätgehäuses aufgebracht werden können, ist der Strömungswächter nach der Lehre von EP-A-288806 thermisch ausgesprochen flink. Da es bei diesem Strömungswächter im übrigen nicht erforderlich ist, die funktionsnotwendigen Bauelemente — erstes Temperaturmeßelement, Heizelement und zweites Temperaturmeßelement — mit einem thermisch gut leitenden Epoxydharz zu vergießen, kann dieser Strömungswächter auch wesentlich weniger aufwendig hergestellt werden.

Das zuvor beschriebene Wärmeübergangsmeßgerät ist herstellungstechnisch noch etwas aufwendig, so daß der Lehre der vorliegenden Erfindung die Aufgabe zugrunde liegt, dieses Wärmeübergangsmeßgerät so auszugestalten und weiterzubilden, daß insbesondere die Herstellung einfacher ist.

Das erfindungsgemäße Wärmeübergangsmeßgerät, also der erfindungsgemäße Strömungswächter, bei dem die zuvor aufgezeigte Aufgabe gelöst ist, ist nun zunächst und im wesentlichen dadurch gekennzeichnet, daß ein dem Innendurchmesser des Meßgerätgehäuses angepaßter Kunststoffträger vorgesehen und die Trägerfolie zwischen dem Kunststoffträger und dem Meßgerätgehäuse angeordnet ist. Damit ist die Möglichkeit geschaffen, vor dem Einbringen der Trägerfolie mit den darauf aufgebrachten Bauelementen, dem ersten Temperaturmeßelement, dem Heizelement und dem zweiten Temperaturmeßelement, in das Meßgerätgehäuse die mit den vorgenannten Bauelementen versehene Trägerfolie um den Kunststoffträger zu legen und den Kunststoffträger mit der mit den funktionsnotwendigen Bauelementen versehenen Trägerfolie in das Meßgerätgehäuse einzubringen. Die erfindungsgemäße Verwendung eines dem Innendurchmesser des Meßgerätgehäuses angepaßten Kunststoffträgers in der zuvor erläuterten Weise führt vor allem auch dazu, daß die Trägerfolie mit ihrer den Temperaturmeßelementen und dem Heizelement abgewandten Seite in den Bereichen, in denen die Temperaturmeßelemente und das Heizelement aufgebracht sind, sicher und gezielt mit dem Meßgerätgehäuse in wärmeleitenden Kontakt gebracht werden kann. Dies ist besonders vorteilhaft dann sichergestellt, wenn der Kunststoffträger zumindest teilweise einen Längsschlitz aufweist. Dies gibt die Möglichkeit, den Außendurchmesser des Kunststoffträgers etwas größer als den Innendurchmesser des Meßgerätegehäuses zu wählen, so daß beim Einführen des Kunststoffträgers mit der um den Kunststoffträger gelegten Trägerfolie die durch den Längsschlitz realisierte Federeigenschaft des Kunststoffträgers ausgenutzt werden kann.

Eingangs ist darauf hingewiesen worden, daß im Stand der Technik das Innere des Meßgerätegehäuses zumindest teilweise mit Gießharz, nämlich mit Epoxydharz ausgefüllt ist. In das Meßgerätgehäuse Gießharz, vorzugsweise Epoxydharz einzubringen, kann sich auch für das erfindungsgemäße Wärmeübergangsmeßgerät bzw. den erfindungsgemäßen Strömungswächter empfehlen. Dazu geht eine weitere Lehre der Erfindung dahin, der auch losgelöst von der zuvor beschriebenen Lehre der Erfindung Bedeutung zukommt, oberhalb des ersten Temperaturmeßelementes, des Heizelementes und des zweiten Temperaturmeßelementes einen Dichtstopfen vorzusehen und oberhalb des Dichtstopfens Gießharz, vorzugsweise Epoxydharz einzufüllen. Dadurch ist erreicht, daß einerseits die funktionsnotwendigen Bauelemente, also das erste Temperaturmeßelement, das Heizelement und das zweite Temperaturmeßelement, frei von Gießharz bleiben, daß gleichwohl in dem Meßgerätgehäuse vorgesehenes Gießharz die elektrischen Bauelemente nach außen hermetisch abschließt und daß das Gießharz besonders einfach eingefüllt werden kann, ohne daß es in den Bereich gelangt, in dem sich das erste Temperaturmeßelement, das Heizelement und das zweite Temperaturmeßelement befinden.

Im einzelnen kann die Lehre der Erfindung in unterschiedlicher Weise ausgestaltet und weitergebildet werden, was im folgenden anhand eines zeichnerisch dargestellten Ausführungsbeispiels erläutert werden soll ; es zeigt

Fig. 1 schematisch, einen Schnitt durch ein erstes Ausführungsbeispiel eines bekannten Strömungswächters,

Fig. 2 in gegenüber der Fig. 1 vergrößerter Darstellung, die Trägerfolie des Strömungswächters nach Fig. 1 mit den darauf angeordneten funktionsnotwendigen Bauelementen,

Fig. 3 schematisch, einen Schnitt durch ein zweites Ausführungsbeispiel eines bekannten Strömungswächters,

Fig. 4 in gegenüber der Fig. 3 vergrößerter Darstellung, die Trägerfolie des Strömungswächters nach Fig. 3 mit den darauf angeordneten funktionsnotwendigen Bauelementen,

Fig. 5 schematisch, einen Schnitt durch ein drittes Ausführungsbeispiel eines bekannten Strömungswächters,

Fig. 6 in vergrößerter Darstellung, die Trägerfolie eines vierten Ausführungsbeispiels eines bekannten Strömungswächters, teilweise mit den darauf angeordneten funktionsnotwendigen Bauelementen,

Fig. 7 ein für den erfindungsgemäßen Strömungswächter wesentliches Bauelement, nämlich einen Kunststoffträger,

Fig. 8 ein bei einem bevorzugten Ausführungsbeispiel eines erfindungsgemäßen Strömungswächters verwendetes Bauelement, nämlich einen Montagering,

Fig. 9 ein bei einem bevorzugten Ausführungsbeispiel eines erfindungsgemäßen Strömungswächters weiter verwendetes Bauelement, nämlich einen Dichtstopfen,

Fig. 10 eine Ansicht der zu einem bevorzugten Ausführungsbeispiel eines erfindungsgemäßen Strömungswächters gehörenden Bauelemente, vormontiert, vor dem Einbringen in das Meßgerätegehäuse, und

Fig. 11 einen Schnitt durch ein bevorzugtes Ausführungsbeispiel eines erfindungsgemäßen Strömungswächters.

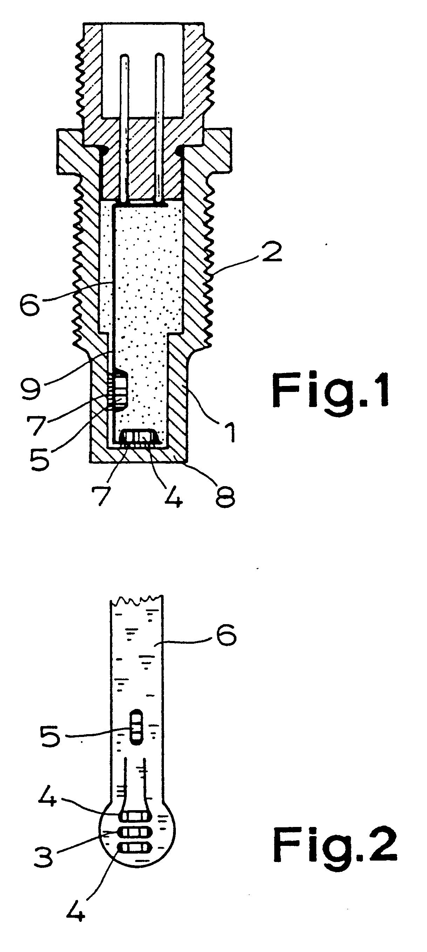

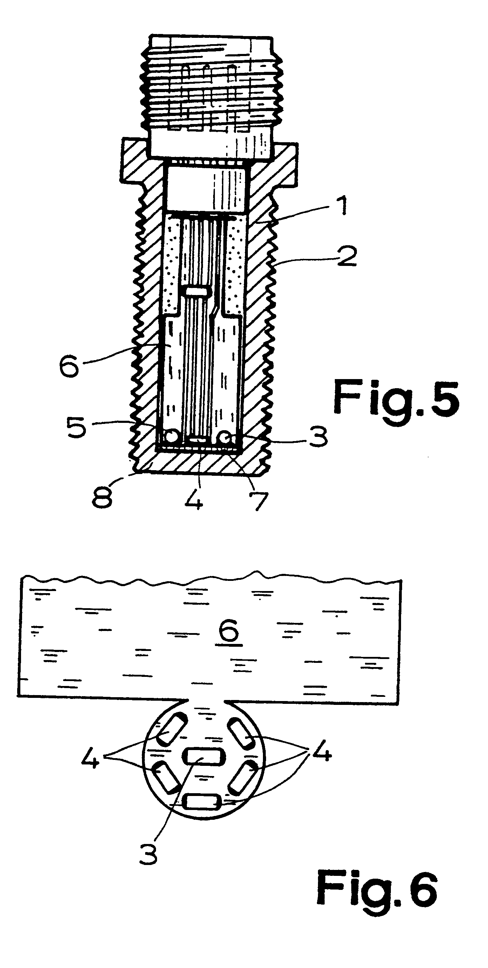

Das in den Figuren dargestellte Wärmeübergangsmeßgerät ist ein Strömungswächter zur elektrischen Erfassung von Wärmeverlusten in einem strömenden Medium und weist auf ein metallisches, kreiszylindrisches Meßgerätegehäuse, das teilweise (Fig. 1, 3 und 11) bzw. ganz (Fig. 5) mit einem Außengewinde 2 versehen ist, ein erstes Temperaturmeßelement 3, ein Heizelement 4 und ein zweites Temperaturmeßelement 5. Die in den Figuren dargestellten Strömungswächter arbeiten nach dem Prinzip der Differenztemperaturmessung. Das erste Temperaturmeßelement 3 mißt eine durch das Heizelement 4 und durch das strömende Medium bestimmte Temperatur, im folgenden Meßtemperatur genannt, während das zweite Temperaturmeßelement 5 eine von dem Heizelement 4 möglichst nicht oder in anderer Weise und durch das strömende Medium bestimmte Temperatur, im folgenden Referenztemperatur genannt, mißt. Zu den dargestellten Strömungswächtern gehören also funktionsnotwendig das erste Temperaturmeßelement 3, das Heizelement 4 und das zweite Temperaturmeßelement 5.

Mit den dargestellten Strömungswächtern soll die Strömung eines flüssigen Mediums, u. U. auch eines aggressiven Mediums, überwacht werden, so daß die für die Funktion notwendigen Bauelemente — erstes Temperaturmeßelement 3, Heizelement 4 und zweites Temperaturmeßelement 5 — nicht einfach in den Flüssigkeitsstrom eingebracht werden können, so daß die für die Funktion notwendigen Bauelemente in dem Meßgerätgehäuse 1 angeordnet sind.

Wie dargestellt, sind das erste Temperaturmeßelement 3, das Heizelement 4 und das zweite Temperaturmeßelement 5 auf einer Seite einer elektrisch gut isolierenden, thermisch gut leitenden Trägerfolie 6 aufgebracht und ist die Trägerfolie 6 mit ihrer den Temperaturmeßelementen 3, 5 und dem Heizelement 4 abgewandten Seite — zumindest in den Bereichen, in denen die Temperaturmeßelemente 3, 5 und das Heizelement 4 aufgebracht sind — mit dem Meßgerätgehäuse 1 in wärmeleitenden Kontakt gebracht. Die Trägerfolie 6 besteht vorzugsweise aus Polymid und hat eine Dicke von ca. 50-150 µm, insbesondere von 75 µm.

Der beschriebene Strömungswächter ist thermisch ausgesprochen flink, weil das erste Temperaturmeßelement 3, das Heizelement 4 und das zweite Temperaturmeßelement 5 thermisch praktisch direkt auf den Innenflächen des Meßgerätgehäuses 1 an gebracht sind. Um nun die thermische Leitfähigkeit zwischen dem ersten Temperaturmeßelement 3, dem Heizelement 4 und dem zweiten Temperaturmeßelement 5 einerseits sowie den Innenflächen des Meßgerätgehäuses 1 andererseits noch zu verbessern, ist in den Bereichen, in denen die Temperaturmeßelemente 3, 5 und das Heizelement 4 aufgebracht sind, zwischen der Trägerfolie 6 und dem Meßgerätgehäuse 1 Wärmeleitpaste 7 vorgesehen.

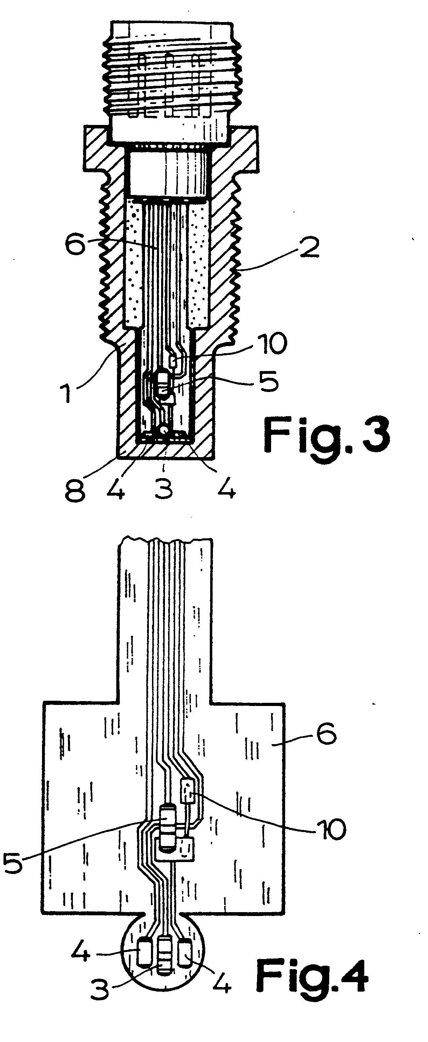

In den in den Fig. 1 und 2 einerseits sowie in den Fig. 3 und 4 andererseits dargestellten Ausführungsbeispielen sind das erste Temperaturmeßelement 3 und das Heizelement 4 an der Stirnseite 8 des Meßgerätgehäuses 1 angeordnet, während das zweite Temperaturmeßelement 5 mit Abstand von der Stirnseite 8 des Meßgerätgehäuses 1 am Zylindermantel 9 des Meßgerätgehäuses 1 angeordnet ist. Wie die Fig. 2 und 4 zeigen, sind bei diesen Ausführungsbeispielen zwei Heizelemente 4 vorgesehen und ist das erste Temperaturmeßelement zwischen den beiden Heizelementen 4 angeordnet. Demgegenüber zeigt Fig. 6 ein Ausführungsbeispiel, bei dem mehrere Heizelemente 4, nämlich fünf Heizelemente 4 vorgesehen sind und die Heizelemente 4 kreisförmig um das erste Temperaturmeßelement 3 herum angeordnet sind.

Im Gegensatz zu den Ausführungsbeispielen nach den Fig. 1 und 2 einerseits sowie den Fig. 3 und 4 andererseits zeigt die Fig. 5 ein Ausführungsbeispiel, bei dem das erste Temperaturmeßelement 3, das Heizelement 4 und das zweite Temperaturmeßelement 5 an der Stirnseite 8 des Meßgerätgehäuses 1 angeordnet sind. Dabei ist das Heizelement 4 zwischen dem ersten Temperaturmeßelement 3 und dem zweiten Temperaturmeßelement 5 angeordnet. Es handelt sich hier um ein Ausführungsbeispiel, mit dem nicht nur festgestellt werden kann, ob das Medium, dessen Strömung überwacht werden soll, auch tatsächlich strömt, vielmehr kann mit diesem Ausführungsbeispiel eines Strömungswächters auch die Richtung der Strömung festgestellt werden.

Bei allen in den Figuren dargestellten Ausführungsbeispielen von Strömungswächtern sind das erste Temperaturmeßelement 3, das Heizelement 4 bzw. die Heizelemente 4 und das zweite Temperaturmeßelement 5 als SMD-Bauelemente ausgeführt, und zwar teilweise als MELF-Bauelemente, teilweise als Chip-Bauelemente. Insoweit als das erste Temperaturmeßelement 3, das Heizelement 4 bzw. die Heizelemente 4 und das zweite Temperaturmeßelement 5 als Chip-Bauelemente ausgeführt sind, sind sie mit der Meßschicht bzw. mit der Heizschicht auf der Trägerfolie 6 liegend angeordnet (face down).

Wesentlich für die beschriebenen Ausführungsbeispiele ist, daß eine elektrisch gut isolierende, thermisch gut leitende Trägerfolie 6 vorgesehen ist, auf der das erste Temperaturmeßelement 3, das Heizelement 4 und das zweite Temperaturmeßelement 5 aufgebracht sind. Folglich bietet es sich an, auf der Trägerfolie 6 weitere Bauelemente, vorzugsweise weitere SMD-Bauelemente 10 vorzusehen, was den Fig. 3 und 4 entnommen werden kann.

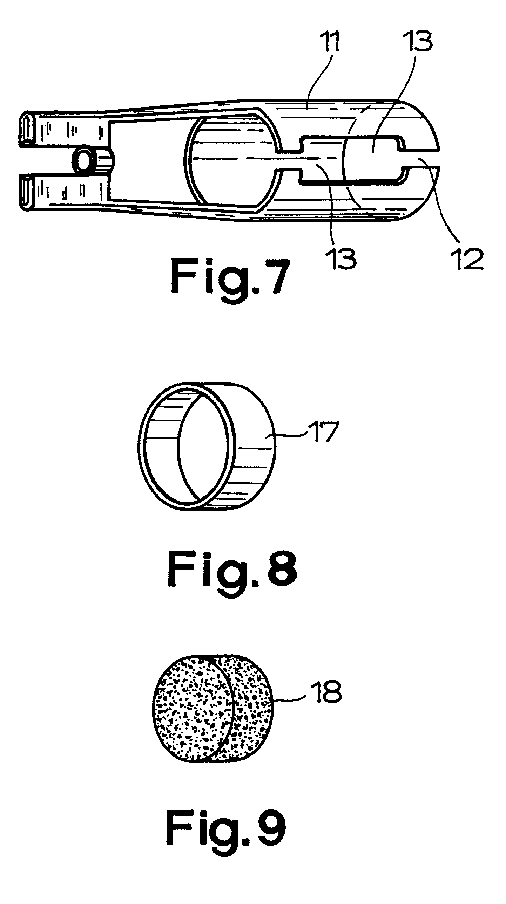

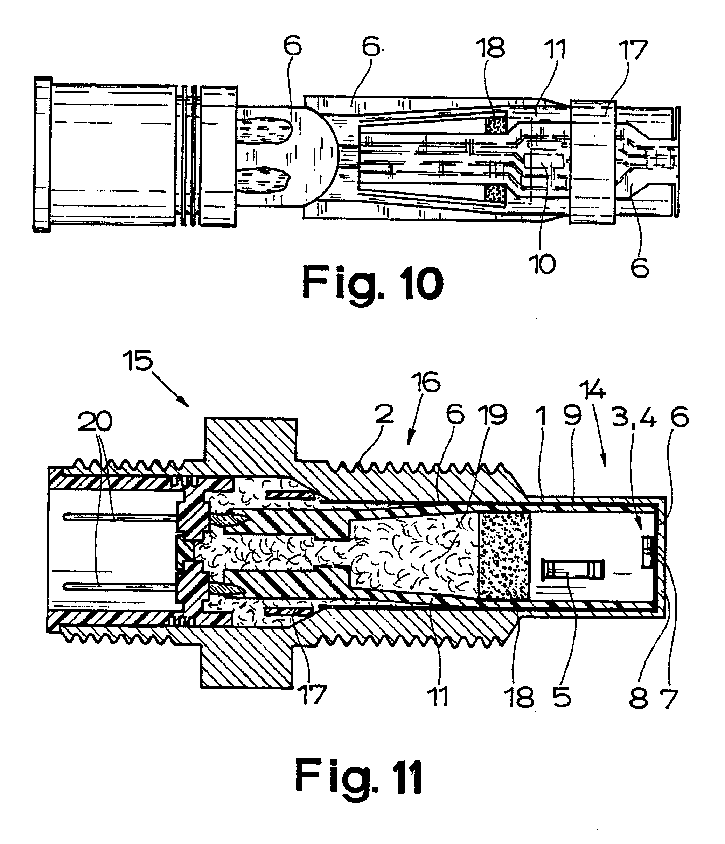

Bei dem erfindungsgemäßen Strömungswächter ist nun zunächst ein dem Innendurchmesser des Meßgerätgehäuses 1 angepaßter Kunststoffträger 11, der für sich in Fig. 7 dargestellt ist, vorgesehen und die Trägerfolie 6 zwischen dem Kunststoffträger 11 und dem Meßgerätgehäuse 1 angeordnet, was Fig. 11 zeigt. Der Kunststoffträger 11 weist einen Längsschlitz 12 und an den dem ersten Temperaturmeßelement 3, dem Heizelement 4 bzw. den Heizelementen 4 und dem zweiten Temperaturmeßelement 5 entsprechenden Stellen Ausnehmungen 13 auf.

Wie die Fig. 1, 3, 5 und 11 zeigen, besteht das Meßgerätgehäuse 1 jeweils aus einem das erste Temperaturmeßelement 3, das Heizelement 4 bzw. die Heizelemente 4 und das zweite Temperaturmeßelement 5 aufnehmenden Fußbereich 14, einem dem elektrischen Anschluß dienenden Kopfbereich 15 und einem den Fußbereich und den Kopfbereich verbindenden Mittelbereich 16. Im Ausführungsbeispiel nach den Fig. 1 und 3 weist das Meßgerätgehäuse 1 in seinem Kopfbereich 15 und in seinem Mittelbereich 16 einen größeren Innendurchmesser als im Fußbereich 14 auf. Im Ausführungsbeispiel nach Fig. 5 ist der Innendurchmesser des Meßgerätgehäuses 1 durchgehend gleich. Im Ausführungsbeispiel nach Fig. 11 weist demgegenüber das Meßgerätgehäuse 1 in seinem Kopfbereich 15 einen größeren Innendurchmesser als im Fußbereich 14 und im Mittelbereich 16 auf.

Für das bevorzugte Ausführungsbeispiel des erfindungsgemäßen Strömungswächters gilt, daß ein mit seinem Innendurchmesser dem Außendurchmesser des Kunststoffträgers 11 angepaßter Montagering 17, im einzelnen in Fig. 8 dargestellt, vorgesehen ist und der Montagering 17 sich nach dem Einführen des Kunststoffträgers 11 und der um den Kunststoffträger 11 gelegten Trägerfolie 6 im erweiterten Kopfbereich 15 des Meßgerätgehäuses 1 befindet.

Im übrigen zeigen die Fig. 1, 3, 5, 10 und 11, daß die Trägerfolie 6 direkt mit einem Anschlußstecker 20 verbunden ist.

Eine Zusammenschau der Fig. 7 bis 9, insbesondere der Fig. 10 und 11 zeigt, wie bei der Herstellung des erfindungsgemäßen Strömungswächters vorgegangen wird :

Zunächst werden die funktionsnotwendigen Bauteile, also das erste Temperaturmeßelement 3, das Heizelement 4 bzw. die Heizelemente 4 und das zweite Temperaturmeßelement 5 auf die Trägerfolie 6 aufgebracht. Dann wird die Trägerfolie 6 mit den darauf aufgebrachten Bauelementen um den Kunststoffträger 11 gelegt. Als nächstes wird dann der Montagering 17 über die um den Kunststoffträger 11 gelegte Trägerfolie 6 geschoben, wie das in Fig. 10 dargestellt ist. Nun können die gleichsam vormontierten, zu dem erfindungsgemäßen Strömungswächter gehörenden Bauelemente in das Meßgerätgehäuse 1 eingeführt werden. Da der Montagering 17 einen Außendurchmesser hat, der größer ist als der Innendurchmesser des Meßgerätgehäuses 1 im Fußbereich 14 und im Mittelbereich 16, verbleibt der Montagering 17 beim Einführen der vormontierten Bauelemente in das Meßgerätgehäuse 1 im Kopfbereich 15 des Meßgerätgehäuses 1 ; die gemäß der Fig. 10 vormontierten Bauelemente werden also gleichsam durch den Montagering 17 hindurchgeschoben. Der Kunststoffträger 11 hat einerseits einen Außendurchmesser, der größer ist als der Innendurchmesser des Meßgerätgehäuses 1 im Fußbereich 14 und im Mittelbereich 16, weist andererseits den Längsschlitz 12 auf. Beim Einführen der vormontierten, in Fig. 10 dargestellten Bauelemente in das Meßgerätgehäuse 1 wird die durch den Längsschlitz 12 realisierte Federeigenschaft des Kunststoffträgers 13 ausgenutzt. Im eingeführten Zustand ist damit dafür gesorgt, daß die Trägerfolie 6 mit ihrer den Temperaturmeßelementen 3, 5 und dem Heizelement 4 bzw. den Heizelementen 4 abgewandten Seite in den Bereichen, in denen die Temperaturmeßelemente 3, 5 und das Heizelement 4 bzw. die Heizelemente 4 aufgebracht sind, sicher und gezielt mit dem Meßgerätgehäuse 1 in wärmeleitenden Kontakt kommt.

Nach dem Einführen der vormontierten Bauelemente in das Meßgerätgehäuse 1 wird in das Meßgerätgehäuse 1 Gießharz, vorzugsweise Epoxydharz eingefüllt. Dabei ist durch den Dichtstopfen 18 sichergestellt, daß das Gießharz nicht in den Fußbereich 14 des Meßgerätgehäuses 1 eindringt und daß folglich das Gießharz nicht mit dem ersten Temperaturmeßelement 3, dem Heizelement 4 bzw. den Heizelementen 4 und dem zweiten Temperaturmeßelement 5 in Berührung kommt.

## Patentansprüche

1. Wärmeübergangsmeßgerät, insbesondere Strömungswächter zu elektrischen Erfassung von Wärmeverlusten in einem strömenden Medium, mit einem vorzugsweise metallischen, kreiszylindrischen, mit einem Außengewinde versehen Meßgerätgehäuse, mit einem ersten Temperaturmeßelement, mit mindestens einem Heizelement und mit einem zweiten Temperaturmeßelement, wobei das erste Temperaturmeßelement, das Heizelement und das zweite Temperaturmeßelement auf einer Seite einer elektrisch gut isolierenden, thermisch gut leitenden Trägerfolie aufgebracht sind und die Trägerfolie mit ihrer den Temperaturmeßelementen und dem Heizelement abgewandten Seite zumindest in den Bereichen, in denen die Temperaturmeßelemente und das Heizelement aufgebracht sind, mit dem Meßgerätgehäuse in wärmeleitenden Kontakt gebracht ist, wobei ein dem Innendurchmesser des Meßgerätgehäuses (1) angepaßter Kunststoffträger (11) vorgesehen und die Trägerfolie (6) zwischen dem Kunststoffträger (11) und dem Meßgerätgehäuse (1) angeordnet ist.

2. Wärmeübergangsmeßgerät nach Anspruch 1, dadurch gekennzeichnet, daß der Kunststoffträger (11) zumindest teilweise einen Längsschlitz (12) aufweist.

3. Wärmeübergangsmeßgerät nach Anspruch 1 oder 2, dadurch gekennzeichnet, daß der Kunststoffträger (11) an den dem ersten Temperaturmeßelement (3), dem Heizelement (4) und dem zweiten Temperaturmeßelement (5) entsprechenden Stellen Ausnehmungen (13) aufweist.

4. Wärmeübergangsmeßgerät nach einem der Ansprüche 1 bis 3, dadurch gekennzeichnet, daß das Meßgerätgehäuse (1) aus einem das erste Temperaturmeßelement (3), das Heizelement (4) und das zweite Temperaturmeßelement (5) aufnehmenden Fußbereich (14), einem dem elektrischen Anschluß dienenden Kopfbereich (15) und einem den Fußbereich (14) und den Kopfbereich (15) verbindenden Mittelbereich (16) besteht.

5. Wärmeübergangsmeßgerät nach Anspruch 4, dadurch gekennzeichnet, daß das Meßgerätgehäuse (1) in seinem Kopfbereich (15) einen größeren Innenduchmesser als im Fußbereich (14) und im Mittelbereich (16) aufweist.

6. Wärmeübergangsmeßgerät nach Anspruch 5, dadurch gekennzeichnet, daß ein mit seinem Innendurchmesser dem Außendurchmesser des Kunststoffträgers (11) angepaßter Montagering (17) vorgesehen ist und der Montagering (17) sich nach dem Einführen des Kunststoffträgers (11) und der um den Kunststoffträger (11) gelegten Trägerfolie (6) im erweiterten Kopfbereich (15) des Meßgerätgehäuses (1) befindet.

7. Wärmeübergangsmeßgerät, nach einem der Ansprüche 1 bis 6, **dadurch gekennzeichnet**, daß oberhalb des ersten Temperaturmeßelementes (3), des Heizelementes (4) und des zweiten Temperaturmeßelementes (5) ein Dichtstopfen (18) vorgesehen und oberhalb des Dichtstopfens (18) Gießharz, vorzugsweise Epoxydharz eingefüllt ist.

8. Wärmeübergangsmeßgerät nach Anspruch 7, dadurch gekennzeichnet, daß der Dichtstopfen (18) aus Polyurethan-Schaumstoff besteht.

9.Wärmeübergangsmeßgerät nach Anspruch 7 oder 8, dadurch gekennzeichnet, daß der Dichtstopfen (18) innerhalb des Kunststoffträgers (11) angeordnet ist.

## Claims

1. A heat transfer measuring equipment, particularly a flow monitor for the electrical detection of heat losses in a flowing medium, with a preferably metallic cylindrical measuring equipment housing provided with an external thread, with a first temperature measuring unit, with at least one heating unit and with a second temperature measuring unit, in which the first temperature measuring unit, the heating unit and the second heat measuring unit are applied to one side of a carrier foil that is a good electrical insulator and a good heat conductor and, at least in those areas to which the temperature measuring units and the heating unit are applied, the side of the carrier foil facing away from the temperature measuring units and the heating unit is brought into heat-conducting contact with the measuring equipment housing, in which a plastics carrier (11) adapted to the internal diameter of the measuring equipment housing (1) is provided, and the carrier foil (6) is located between the plastics carrier (11) and the measuring equipment housing (1).

2. A heat transfer measuring equipment according to Claim 1, *characterized in that* at least part of the plastics carrier (11) has a longitudinal slot (12).

3. A heat transfer measuring equipment according to Claim 1 or 2, *characterized in that* the plastics carrier (11) has recesses (13) at points corresponding to the first temperature measuring unit (3), the heating unit (4) and the second temperature measuring unit (5).

4. A heat transfer measuring equipment according to one of Claims 1 to 3, *characterized in that* the measuring equipment housing (1) consists of a foot portion (14) receiving the first temperature measuring unit (3), the heating unit (4) and the second temperature measuring unit (5), a head portion (15) dealing with the electrical connection, and a central portion (16) connecting the foot portion (14) and the head portion (15) together.

5. A heat transfer measuring equipment according to Claim 4, *characterized in that* the measuring equipment housing (1) has a larger internal diameter in its head portion (15) than in the foot portion (14) and the central portion (16).

6. A heat transfer measuring equipment according to Claim 5, *characterized in that* an assembly ring (17) with its internal diameter matching the outer diameter of plastics carrier (11) is provided, and assembly ring (17) after introduction of the plastics carrier (11) and carrier foil (6) laid around plastics carrier (11) is located in the enlarged head portion (15) of measuring equipment housing (1).

7. A heat transfer measuring equipment according to one of Claims 1 to 6, *characterized in that* a sealing plug (18) is provided above the first temperature measuring unit (3), the heating unit (4) and the second temperature measuring unit (5), and casting resin, preferably epoxy resin, is cast in above the sealing plug (18).

8. A heat transfer measuring equipment according to Claim 7, *characterized in that* the sealing plug (18) consists of foamed polyurethane material.

9. A heat transfer measuring equipment according to Claim 7 or 8, *characterized in that* the sealing plug (18) is located inside plastics carrier (11).

## Revendications

1. Appareil de mesure de transfert thermique, notamment contrôleur d'écoulement pour la détection électrique de pertes de chaleur dans un milieu en écoulement, comportant un boîtier en forme de cylindre circulaire, de préférence métallique, pourvu d'un filetage extérieur, un premier élément de mesure de température, au moins un élément chauffant et un second élément de mesure de température, et dans lequel le premier élément de mesure de température, l'élément chauffant et le second élément de mesure de température sont disposés sur une face d'une feuille de support qui réalise une bonne isolation électrique et une bonne conduction thermique, et la feuille de support est placée en contact, réalisant une conduction thermique, avec le boîtier de l'appareil de mesure, par sa face tournée à l'opposé des éléments de mesure de température et de l'élément chauffant, au moins dans les zones dans lesquelles les éléments de mesure de température et l'élément chauffant sont disposés, et dans lequel il est prévu un support en matière plastique (11) adapté au diamètre intérieur du boîtier (1) de l'appareil de mesure, et la feuille de support (6) est disposée entre le support en matière plastique (11) et le boîtier (1) de l'appareil de mesure.

2. Appareil de transfert thermique selon la revendication 1, caractérisé en ce que le support en matière plastique (11) possède au moins en partie une fente longitudinale (12).

3. Appareil de mesure de transfert thermique selon la revendication 1 ou 2, caractérisé en ce que le support en matière plastique (11) comporte des évidements (13) au niveau des emplacements correspondant au premier élément de mesure de température (3), à l'élément chauffant (4) et au second élément de mesure de température (5).

4. Appareil de mesure de température de transfert thermique selon l'une des revendications 1 à 3, caractérisé en ce que le boîtier (1) de l'appareil de mesure est constitué par une partie formant pied (14) logeant le premier élément de mesure de température (3), l'élément chauffant (4) et le second élément de mesure de température (5), une partie de tête (15) utilisée pour le raccordement électrique, et une partie médiane (16) reliant la partie formant pied (14) à la partie de tête (15).

5. Appareil de mesure de transfert thermique selon la revendication 4, caractérisé en ce que le boîtier (1) de l'appareil de mesure possède, dans sa partie de tête (15), un diamètre intérieur plus important que dans la partie formant pied (14) et dans la partie médiane (16).

6. Appareil de mesure de transfert thermique selon la revendication 5, caractérisé en ce qu'il est prévu un anneau de montage (17), dont le diamètre intérieur est adapté au diamètre extérieur du support en matière plastique (11) et que l'anneau de montage (17) est situé, après l'insertion du support en matière plastique (11) et de la feuille de support (6) disposée autour du support en matière plastique (11), dans la partie de tête élargie (15) du boîtier (1) de l'appareil de mesure.

7. Appareil de mesure de transfert thermique selon l'une des revendications 1 à 6, caractérisé en ce qu'un bouchon d'étanchéité (6) est prévu au-dessus du premier élément de mesure de température (3), de l'élément chauffant (4) et du second élément de mesure de température (5), et qu'une résine de coulée, de préférence une résine époxy, est introduite au-dessus du bouchon d'étanchéité (18).

8. Appareil de mesure de transfert thermique selon la revendication 7, caractérisé en ce que le bouchon d'étanchéité (18) est formé par une mousse de polyuréthane.

9. Appareil de mesure de transfert thermique selon la revendication 7 ou 8, caractérisé en ce que le bouchon d'étanchéité (18) est disposé à l'intérieur du support en matière plastique (11).

Fig.1

Fig.2

**Fig.3**

**Fig.4**

Fig.5

Fig.6

Fig.7

Fig.8

Fig.9

**Fig. 10**

**Fig. 11**